# EUROPÄISCHE PATENTANMELDUNG

(11) **EP 2 803 927 A1**
(43) Veröffentlichungstag der Anmeldung: **19.11.2014**
(21) Anmeldenummer: 13168154.6
(22) Anmeldetag: 17.05.2013
(51) Int. Cl.: F27B 3/19, C21C 5/46, F27D 3/15, F27B 14/02

(54) **Metallurgisches Ofengefäß und Verfahren zu seinem Betrieb**

(71) Anmelder: Siemens VAI Metals Technologies GmbH, 4031 Linz (AT)
(72) Erfinder: Abel, Markus, 77694 Kehl-Bodersweier (DE); Fleischer, Martin, 77654 Offenburg (DE); Hein, Michel, 67170 Brumath (FR); Müller, Alexander, 77652 Offenburg (DE)
(74) Vertreter: Maier, Daniel Oliver

(57) **Zusammenfassung**

In einen Schmelzraum (10) eines metallurgischen Ofengefäßes (2) mündet zum Entnehmen von flüssigem Metall (8) ein feuerfest ummantelter Abstichkanal (20) mit einer Eintrittsöffnung (22), die oberhalb des Bodens (14) des Schmelzraumes (10) in einem zum Schmelzraum (10) hin offenen Balkon (26) angeordnet ist. Mit einer derartigen Anordnung ist es bei zugleich hoher Menge an Restsumpf möglich, den Abstichkanal (20) nach Entnehmen von flüssigem Metall (8) mit einem feuerfesten Material zu verfüllen, wenn sich das Ofengefäß (2) in einer waagrechten Ausgangsstellung befindet.

## Beschreibung

Die Erfindung bezieht sich auf ein metallurgisches Ofengefäß mit einem feuerfest ummantelten Kanal zum Entnehmen von flüssigem Metall. Die Erfindung bezieht sich außerdem auf ein Verfahren zum Betreiben eines solchen Ofengefäßes.

Beim Einschmelzen von eisenhaltigem Schrott in einem Lichtbogenofen muss aus energetischen Gründen auch nach dem Abstechen ein aufgeschmolzener Restsumpf im Ofengefäß verbleiben, um den Schmelzprozess nach erneutem Befüllen des Lichtbogenofens zeit- und energiesparend fortführen zu können. Dies geschieht in der Regel dadurch, dass der Abstichvorgang durch ein Zurückkippen des Ofengefäßes gestoppt wird, wodurch ein außerhalb der Mitte des Innen- bzw. Schmelzraumes des Ofengefäßes in diesen mündender Abstichkanal freigelegt wird und neu verschlossen und verfüllt werden kann. Um im Vergleich zur Abstichmenge eine hohe Restsumpfmenge zurückhalten zu können, müssen entweder der Durchmesser des Schmelzraumes des Ofengefäßes oder der Kippwinkel, d.h. der Winkel, um den das Ofengefäß zurückgekippt werden muss, vergrößert werden. Ersteres ist jedoch energetisch ungünstig, da mit einer derartigen Vergrößerung des Schmelzraumes auch die Oberfläche des Restsumpfes vergrößert wird, so dass diese schneller abkühlt. Des Weiteren darf auch die Tiefe des Restsumpfes ein kritisches Maß nicht unterschreiten, um die nach erneuter Befüllung mit stückigem Schrott folgende Einleitung des Schmelzprozesses nach wie vor begünstigen zu können. Nachteilig an einem großen Kippwinkel ist außerdem zum einen die hierzu erforderliche aufwendige Auslegung der Kippmechanik und zum anderen die damit verknüpfte Schiefstellung des Abstichkanals, der dann nach Beenden des Abstichvorganges nicht mehr ohne weiteres mit Stopfmasse verfüllt werden kann.

Der Erfindung liegt daher die Aufgabe zugrunde, ein metallurgisches Ofengefäß anzugeben, mit dem es möglich ist, mit kleinen Kippwinkeln bei zugleich kleiner Badoberfläche ein im Vergleich zur Abstichmenge hohen Anteil an Restsumpf im Ofengefäß zurückhalten zu können. Außerdem liegt der Erfindung die Aufgabe zugrunde, ein Verfahren zum Betreiben eines solchen Ofengefäßes anzugeben.

Die erstgenannte Aufgabe wird gemäß der Erfindung gelöst mit einem metallurgischen Ofengefäß gemäß den Merkmalen des Patentanspruches 1. Gemäß diesen Merkmalen enthält das Ofengefäß einen feuerfest ummantelten Abstichkanal zum Entnehmen von flüssigem Metall aus einem Schmelzraum des Ofengefäßes, der mit einer Eintrittsöffnung in den Schmelzraum mündet, die oberhalb des Bodens des Schmelzraumes in einem zum Schmelzraum hin offenen Balkon angeordnet ist. Da die Eintrittsöffnung, d.h. die Öffnung, an der flüssiges Metall aus dem Schmelzraum abfließen kann, in einer vorgegebenen Höhe über dem Boden des Schmelzraumes angeordnet ist, ist es möglich, auch mit verhältnismäßig kleinen Kippwinkeln einen Restsumpf im Schmelzraum zurückzuhalten, dessen Höhe (Flüssigmetall + Schlacke) annähernd gleich der Höhe der Eintrittsöffnung ist. Da außerdem die Eintrittsöffnung in einem zum Schmelzraum hin offenen Balkon angeordnet ist, ist sichergestellt, dass oberhalb der Eintrittsöffnung während des Schmelzprozesses stets flüssige Metallschmelze vorliegt. Dadurch ist ein Erstarren der Schmelze oberhalb der Eintrittsöffnung vermieden, ohne dass es hierzu weiterer Maßnahmen bedarf, wie sie beispielsweise bei der aus der WO 00/60297 bekannten Lösung notwendig sind, bei der der Abstich über einen am Boden in den Schmelzraum mündenden und von dort aus ansteigenden siphonartigen Abstichkanal erfolgt, so dass dieser zusätzlich beheizt werden muss. Durch eine solche Anordnung der Eintrittsöffnung ist es bei zugleich hoher Menge an Restsumpf außerdem möglich, den Abstichkanal nach Entnehmen von flüssigem Metall mit einem feuerfesten Material zu verfüllen, wenn sich das Ofengefäß in einer waagrechten Ausgangs- bzw. Arbeitsstellung befindet. Darüber hinaus ist bei im Vergleich zu bekannten Ofengefäßen bei gleicher Menge an Restsumpf dessen Oberfläche kleiner, so dass dementsprechend auch die Abkühlrate verringert und das Einschmelzen von neu hinzu geführtem Schrott schneller erfolgt und mit verringertem energetischem Aufwand möglich ist. Insbesondere ist es außerdem möglich, sowohl während des Entnehmens des flüssigen Metalls als auch während des Verfüllens des Abstichkanals dem im Schmelzraum verbliebenen Restsumpf elektrische Energie zuzuführen, um auf diese Weise die Dauer der einzelnen Einschmelzzyklen zu verringern.

Unter Balkon ist im Sinne der vorliegenden Erfindung sowohl ein außen liegender Balkon, der in Form eines Vorsprunges oder einer Stufe in den Schmelzraum hineinragt, als auch ein innen liegender Balkon, der durch eine Tasche oder Nische in der Innenwand des Schmelzraumes gebildet ist, zu verstehen.

Eine besonders einfache konstruktive Gestaltung ergibt sich, wenn die Eintrittsöffnung in einer Arbeits- oder Ausgangsstellung des Ofengefäßes waagrecht angeordnet ist, d.h. auf einer ebenfalls waagrecht angeordneten Fläche des Balkons in den Schmelzraum mündet.

Ein besonders einfaches Verfüllen des Abstichkanals ist möglich, wenn der Balkon durch eine Nische gebildet ist, die seitlich über das Ofengefäß derart hinausragt, dass eine von oben zugängliche Zuführöffnung zum Zuführen von Material zum Verfüllen des Abstichkanals gebildet ist.

Hinsichtlich des Verfahrens wird die genannte Aufgabe gemäß der Erfindung gelöst mit einem Verfahren mit den Merkmalen des Patentanspruches 4, gemäß denen das Ofengefäß nach dem Entnehmen des flüssigen Metalls zum Verfüllen des Abstichkanals in eine waagrechte Ausgangsstellung zurückgekippt wird.

Das Ofengefäß gemäß der Erfindung ermöglicht außerdem weitere vorteilhafte Verfahrensführungen zum Betreiben des metallurgischen Ofengefäßes, deren Merkmale in den Patentansprüchen 5 und 6 wiedergegeben sind.

In der vorteilhaften Ausgestaltung des Verfahrens gemäß den Merkmalen des Patentanspruches 5 wird während des Entnehmens des flüssigen Metalls dem im Schmelzraum befindlichen flüssigem Metall und/oder während des Verfüllens des Abstichkanals einem im Schmelzraum verbliebenen Restsumpf elektrische Energie zugeführt. Durch diese Maßnahme wird ein Erkalten des Restsumpfes verhindert. Dadurch wird nach erneutem Befüllen des Ofengefäßes mit Schrott das Einleiten des Schmelzvorganges beschleunigt und die Schmelzdauer entsprechend verringert.

Die nach dem erneuten Befüllen des Ofengefäßes erforderliche Schmelzdauer kann alternativ auch dadurch verringert werden, dass gemäß Patentanspruch 6 während des Entnehmens des flüssigen Metalls dem im Schmelzraum befindlichen flüssigem Metall und/oder während des Verfüllens des Abstichkanals einem im Schmelzraum verbliebenen Restsumpf Schrott zugeführt wird. Wenn der Schrott während des Verfüllens des Abstichkanals zugeführt wird, muss nur darauf geachtet werden, dass dessen Menge derart begrenzt wird, dass der Balkon nicht mit flüssigem Metall überschwemmt wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Figuren näher erläutert wird.

Es zeigen jeweils in einer schematischen Prinzipskizze:
- FIG 1: ein metallurgisches Ofengefäß gemäß der Erfindung in einem vertikalen Schnitt,
- FIG 2: einen durch den Schmelzraum verlaufenden waagrechten Teilschnitt des Ofengefäßes,
- FIG 3: eine alternative Gestaltung des Ofengefäßes in einer grob vereinfachten Draufsicht.

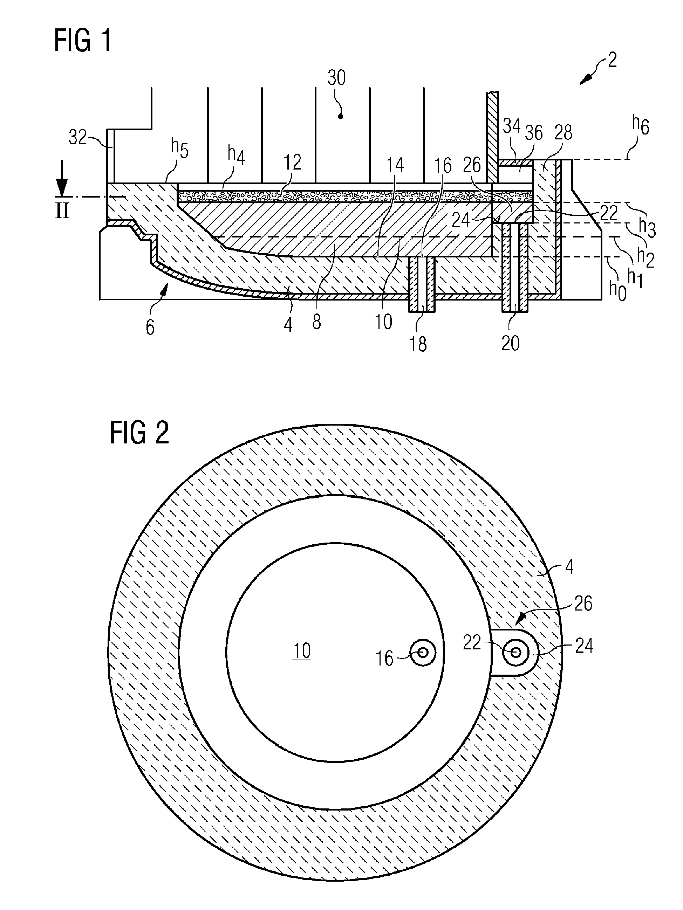

Gemäß FIG 1 und 2 umfasst ein Ofengefäß 2, bei dem es sich im Ausführungsbeispiel um einen Lichtbogenofen handelt, ein mit einer feuerfesten Auskleidung 4 versehenes Gefäßunterteil 6, in dem sich der das flüssige Metall 8 aufnehmende wannenförmige Schmelzraum 10 befindet. Auf dem flüssigen Metall 8 schwimmt eine Schlackeschicht 12. An der tiefsten Stelle des Bodens 14 des Schmelzraumes 10 befindet sich eine Bodenabstichöffnung 16 mit der ein feuerfest ummantelter Bodenabstichkanal 18 in den Schmelzraum 10 mündet. Diese Bodenabstichöffnung 16 befindet sich in einer Höhe h₀ über einer nicht näher bezeichneten Referenzebene. Grundsätzlich ist es nicht notwendig, die Bodenabstichöffnung 16 an der tiefsten Stelle des Bodens 14 anzuordnen. In diesem Fall muss das Ofengefäß 2 zur vollständigen Entleerung zusätzlich gekippt werden.

Mit h₅ ist die Höhe der feuerfesten Ausmauerung des Schmelzraumes 10 bezeichnet. h₄, h₃ und h₁ bezeichnen die Höhe der Schlackeschicht 12, des Badspiegels des flüssigen Metalls 8 bzw. gestrichelt eingezeichnet die maximale Höhe eines Restsumpfes aus flüssigem Metall 8, der nach Entnehmen von flüssigem Metall 8 über einen Abstichkanal 20 im Schmelzraum 10 verbleibt.

Der ebenfalls feuerfest ummantelte und in der in FIG 1 dargestellten Arbeitsstellung vertikal verlaufende Abstichkanal 20 mündet mit einer oberhalb des Bodens 14, d.h. oberhalb der Bodenabstichöffnung 16 bzw. der tiefsten Stelle des Bodens 14 in einer Höhe h₂>h₀ befindlichen Eintrittsöffnung 22 in den Schmelzraum 10. Diese Eintrittsöffnung 22 befindet sich in der Bodenfläche 24 eines zum Schmelzraum 10 hin offenen Balkons 26, der im Ausführungsbeispiel als innen liegender Balkon durch eine Nische oder Tasche mit in Arbeitsstellung ebener Bodenfläche 24 gebildet ist. Der Balkon 26 ist zu den Seiten von einer feuerfesten Ausmauerung 28 umgeben, die sich bis zu einer Höhe h₆ erstreckt. Die Höhendifferenz zwischen der Vorderkante des Balkons 26 und dem Boden 14 am Fuß des durch den Balkon 26 gebildeten Absatzes stimmt im Ausführungsbeispiel mit der Differenz zwischen der Höhe h₂ der Eintrittsöffnung und der Höhe h₀ der Bodenabstichöffnung 16 überein.

Durch Öffnen des Abstichkanals 20 fließt zunächst flüssiges Metall über die Eintrittsöffnung 22 ab. Um diesen Vorgang zu beschleunigen, kann das Ofengefäß 2 um eine Schwenkachse 30 zusätzlich nach unten gekippt werden. Bevor die Höhe h₅ des Badspiegels des flüssigen Metalls 8 die Eintrittsöffnung 22 erreicht, wird das Ofengefäß 2 um die Schwenkachse 30 zu einer der Eintrittsöffnung 22 gegenüberliegenden Abfuhröffnung 32 zum Abführen von Schlacke aus dem Schmelzraum 10 nach oben, beispielsweise zurück in die waagrechte Position gekippt, so dass praktisch keine oder allenfalls nur wenig Schlacke 12 mit abgestochen wird. Da die Höhe h₂ der Eintrittsöffnung 22 über der Höhe h₀ des Bodens liegt, ist zwangsläufig die Höhe h₁ des im Schmelzraum 10 verbleibenden Restsumpfes auch bei einem kleinen Kippwinkel entsprechend groß. Da außerdem nur ein kleiner Kippwinkel erforderlich ist, um einerseits ausreichend Restsumpf im Schmelzraum 10 zurückzuhalten und um andererseits zu verhindern, dass Schlacke 12 abgestochen wird und darüber hinaus auch bei einem kleinen Kippwinkel die Eintrittsöffnung 22 aufgrund ihrer Anordnung oberhalb Bodens 14 des dementsprechend freiliegt, kann diese problemlos verfüllt werden und der Lichtbogenofen kann nur mit geringer Zeitverzögerung erneut mit Schrott bestückt werden, so dass der Zeitraum, in dem der Lichtbogenofen nicht im Betrieb ist, d.h. nicht mit elektrischer Energie versorgt wird, signifikant verringert ist.

Im dargestellten Ausführungsbeispiel ragt die durch den Balkon 26 gebildete Nische seitlich über das Ofengefäß 2 in Form eines von oben zugänglichen Absatzes hinaus, der an seiner Oberseite über der Eintrittsöffnung 22 mit einem entnehmbaren Deckel 34 verschlossen ist, so dass von außen und oberhalb der Eintrittsöffnung zugängliche Zufuhröffnung 36 gebildet wird, über die nach dem Zurückkippen des Ofengefäßes 2 in eine waagrechte Ausgangsposition Material zum Verfüllen der Abstichkanals 20 zugeführt werden kann. Grundsätzlich kann der Balkon auch abweichend vom dargestellten Ausführungsbeispiel durch eine in den Schmelzraum hineinragende Stufe gebildet sein.

Durch den zum Schmelzraum 10 hin offenen Balkon 24 ist außerdem ein Erstarren der Schmelze über der Eintrittsöffnung 22 verhindert, ohne dass dieser zusätzlich beheizt werden muss, so dass ein Abstechen problemlos möglich ist.

Die Höhendifferenz h₂-h₀ zwischen der Eintrittsöffnung 22 und der tiefsten Stelle des Bodens 14 beträgt vorzugsweise zwischen 300 mm und 800 mm, wobei die Höhendifferenz h₂-h₁ zwischen Eintrittsöffnung 22 und Restsumpf wenigstens 100 mm beträgt. Die Höhendifferenz h₃-h₂ zwischen dem Badspiegel und der Bodenfläche 24 bzw. der Eintrittsöffnung 22 vor dem Abstechen beträgt vorzugsweise wenigstens 200 mm, wobei die Höhendifferenz h₃-h₀ nach oben auf 1300 mm begrenzt ist, um eine gute Durchmischung des flüssigen Metalls 8 zu gewährleisten. Bei einem annähernd zylindrischen Schmelzraum ergibt sich demnach bei einer Höhe h₃=h₀+1200 mm des Badspiegels vor dem Abstechen und einer Höhe h₂= h₀+700 mm der Bodenfläche 24 des Balkons 26 ein maximales Verhältnis zwischen Restsumpfmenge und Abstichmenge zu etwa 100 % (1200 mm Badspiegel minus 600 mm Restsumpf entspricht 600 mm Abstichmenge), wenn sich die Abstichmenge nach Zurückkippen des Ofengefäßes 2 100 mm unterhalb der Bodenfläche 24 befinden soll. Ein derart hohes Verhältnis kann dabei mit geringen Kippwinkeln (<10° bei typischen Durchmessern des Schmelzraumes 10 von etwa 6 m) erzielt werden, da ein Kippen des Ofengefäßes nur erfolgen muss, um ein Abstechen der Schlacke 12 zu verhindern.

Im dargestellten Ausführungsbeispiel ist der Balkon 26 durch eine waagrechte Bodenfläche 26 und eine senkrecht verlaufende Stufe gebildet. Grundsätzlich kann der Balkon jedoch sowohl durch eine zum Schmelzraum 10 geneigte Bodenfläche als auch durch eine schräg verlaufende Stufe gebildet sein.

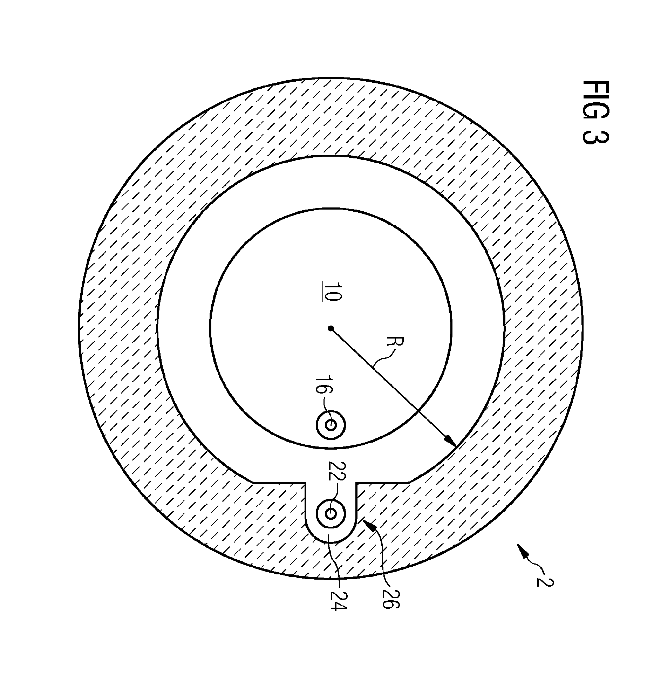

Gemäß FIG 3 ist der Schmelzraum 10 des Ofengefäßes 2 in der Draufsicht die Form eines Kreisabschnittes. Während bei dem in den Figuren 1 und 2 dargestellten Ausführungsbeispiel die Eintrittsöffnung 22 exzentrisch zur Mitte des Schmelzraumes 10 angeordnet ist, befindet sich im Ausführungsbeispiel der FIG 3 die Eintrittsöffnung 22 etwa in einem dem Radius R des vom Schmelzraum 10 festgelegten Kreises entsprechenden Abstand. Auch in diesem Ausführungsbeispiel ist der Balkon 26 als Nische ausgeführt.

Obwohl die Erfindung im Detail durch das bevorzugte Ausführungsbeispiel näher illustriert und beschrieben wurde, so ist die Erfindung dadurch nicht eingeschränkt und Variationen können vom Fachmann hieraus abgeleitet werden, ohne den Schutzumfang der Erfindung zu verlassen.

## Patentansprüche

1. Metallurgisches Ofengefäß mit einem Schmelzraum (10), in den zum Entnehmen von flüssigem Metall (8) ein feuerfest ummantelten Abstichkanal (20) mit einer Eintrittsöffnung (22) mündet, die oberhalb des Bodens (14) des Schmelzraumes (10) in einem zum Schmelzraum (10) hin offenen Balkon (26) angeordnet ist.

2. Metallurgisches Gefäß nach Anspruch 1,
mit einer in einer Arbeitsstellung des Ofengefäßes (2) waagrecht angeordneten Eintrittsöffnung (22).

3. Metallurgisches Gefäß nach Anspruch 1 oder 2,
bei dem der Balkon (26) durch eine Nische gebildet ist, die seitlich über das Ofengefäß (2) derart hinausragt, dass eine von oben zugängliche Zufuhröffnung (36) zum Zuführen von Material zum Verfüllen des Abstichkanals (20) gebildet ist.

4. Verfahren zum Betreiben eines metallurgischen Ofengefäßes (2) nach einem der vorhergehenden Ansprüche,
bei dem das Ofengefäß (2) nach dem Entnehmen des flüssigen Metalls zum Verfüllen des Abstichkanals (20) in eine waagrechte Ausgangsstellung zurückgekippt wird.

5. Verfahren zum Betreiben eines metallurgischen Ofengefäßes (2) nach einem der vorhergehenden Ansprüche,
bei dem während des Entnehmens des flüssigen Metalls (8) dem im Schmelzraum (10) befindlichen flüssigen Metall (8) und/oder während des Verfüllens des Abstichkanals (20) einem im Schmelzraum (10) verbliebenen Restsumpf elektrische Energie zugeführt wird.

6. Verfahren zum Betreiben eines metallurgischen Ofengefäßes (2) nach einem der vorhergehenden Ansprüche,
bei dem während des Entnehmens des flüssigen Metalls (8) dem im Schmelzraum (10) befindlichen flüssigen Metall (8) und/oder während des Verfüllens des Abstichkanals (20) einem im Schmelzraum (10) verbliebenen Restsumpf Schrott zugeführt wird.
